# EUROPEAN PATENT APPLICATION

(11) **EP 4 524 850 A1**
(43) Date of publication of application: **19.03.2025**
(21) Application number: 24198558.9
(22) Date of filing: 05.09.2024
(51) Int. Cl.: G06Q 10/0631, G06Q 50/02, A01B 79/00

(54) **WORK MANAGEMENT METHOD, WORK MANAGEMENT SYSTEM, AND WORK MANAGEMENT PROGRAM**

(30) Priority: 12.09.2023 JP 2023147311
(71) Applicant: Yanmar Holdings Co., Ltd., Osaka-shi, Osaka (JP)
(72) Inventor: MITANI, Hideki, Okayama-shi (JP)
(74) Representative: Dennemeyer & Associates S.A.

(57) **Abstract**

[Problem] For work in a field, management is assisted in a finer unit.

[Solution] A work management method includes determining, based on operation information of a work device 30 that performs work in a field 500, an operation status of the work device 30 at each time. The work management method includes determining, based on the operation information of the work device 30, a ridge 510 on which the work device 30 performed work at each time. Furthermore, the work management method includes outputting work information indicating a display image 400, 400B representing the operation status of the work device 30 and the ridge 510 on which the work device 30 performed work in association with each other at each time.

## Description

### TECHNICAL FIELD

The present invention relates to a work management method, a work management system, and a work management program.

### BACKGROUND ART

In recent years, firming management is efficiently performed by collecting information related to work that was performed in a field. For example, Patent Document 1 discloses a device that calculates a work time during which work was performed in a field, based on position information of a work device.

### PRIOR ART DOCUMENT

### PATENT DOCUMENT

Patent Document 1: Japanese Patent No. 7174619

### SUMMARY OF INVENTION

### TECHNICAL PROBLEM

However, in accordance with the technique described in Patent Document 1, meticulous management in which a work time is managed in units of ridge or like management cannot be performed in a field formed for field firming.

In view of the above-described circumstances, it is an object of the present disclosure to support management for work in a field in a finer unit. Other objects can be understood from the following description and the description of embodiments.

### SOLUTION TO PROBLEM

A means for solving the problems will be described blow with numbers and signs used in embodiments for carrying out the present disclosure. The numbers and signs are added in parentheses as a reference to show an example of corresponding relations between the description of the scope according to claims and the embodiments for carrying out the invention. Therefore, the scope according to claims should not be construed as being limited to the descriptions with the parentheses.

A work management method according to one embodiment to achieve the above-mentioned object includes determining, based on operation information of a work device (30) that performs work in a field (500), an operation status of the work device (30) at each time. The work management method includes determining, based on the operation information of the work device (30), a ridge (510) on which the work device (30) performed work at each time. Furthermore, the work management method includes outputting work information indicating a display image (400, 400B) representing the operation status of the work device (30) and the ridge (510) on which the work device (30) performed work in association with each other at each time.

A work management method according to one embodiment to achieve the above-mentioned object includes determining, based on operation information of a work device (30) that performs work in a field (500), a ridge on which the work device (30) performed work at each time. The work management method includes determining, based on position information of a following device (40), the following device (40) that follows the work device (30) at each time. Furthermore, the work management method includes outputting work information indicating a display image (400B) representing the ridge (510) on which the work device (30) performed work and the following device (40) that follows the work device (30) in association with each other at each time.

A work management method according to one embodiment to achieve the above-mentioned object includes determining, based on operation information of a work device (30) that performs work in a field (500), an operation status of the work device (30) at each time. The work management method includes determining, based on the operation information of the work device (30), a ridge (510) on which the work device (30) performed work at each time. Furthermore, the work management method includes displaying a display image (400, 400B) representing the operation status of the work device (30) and the ridge (510) on which the work device (30) performed work in association with each other at each time.

A work management system (1000) according to one embodiment to achieve the above-mentioned object includes an operation status determination section (150), a ridge determination section (160), and an output section (170). The operation status determination section (150) determines, based on operation information of a work device (30) that performs work in a field (500), an operation status of the work device (30) at each time. The ridge determination section (160) determines, based on the operation information of the work device (30), a ridge (510) on which the work device (30) performed work at each time. The output section (170) outputs work information indicating work information representing a display image (400, 400B) representing the operation status of the work device (30) and the ridge (510) on which work was performed by the work device (30) in association with each other at each time.

A work management system (1000) according to one embodiment to achieve the above-mentioned object includes a ridge determination section (160), an output section (170), and a following device determination section (180). The ridge determination section (160) determines, based on operation information of a work device (30) that performs work in a field (500), a ridge on which the work device (30) performed work at each time. The following device determination section (180) determines, based on position information of a following device (40), the following device (40) that follows the work device 30 at each time. The output section (170) outputs work information indicating a display image (400B) representing the ridge (510) on which the work device (30) performed work and the following device (40) that follows the work device (30) in association with each other at each time.

A work management system (1000) according to one embodiment to achieve the above-mentioned object includes an operation status determination section (150), a ridge determination section (160), and a display section (250). The operation status determination section (150) determines, based on operation information of a work device (30) that performs work in a field (500), an operation status of the work device (30) at each time. The ridge determination section (160) determines, based on the operation information of the work device (30), a ridge (510) on which the work device (30) performed work at each time. The display section (250) displays a display image (400, 400B) representing the operation status of the work device (30) and the ridge (510) on which the work device (30) performed work in association with each other at each time.

A work management program (320) according to one embodiment to achieve the above-mentioned object causes an arithmetic operation device (120, 220) to execute determining, based on operation information of a work device (30) that performs work in a field (500), an operation status of the work device (30) at each time.

The work management program (320) causes the arithmetic operation device (120, 220) to execute determining, based on the operation information of the work device (30), a ridge (510) on which the work device (30) performed work at each time. Furthermore, the work management program (320) causes the arithmetic operation device (120, 220) to execute outputting work information indicating a display image (400, 400B) representing the operation status of the work device (30) and the ridge (510) on which the work device (30) performed work in association with each other at each time.

A work management program (320) according to one embodiment to achieve the above-mentioned object causes an arithmetic operation device (120, 220) to execute determining, based on operation information of a work device (30) that performs work in a field (500), a ridge on which the work device (30) performed work at each time. The work management program (320) causes the arithmetic operation device (120, 220) to execute determining, based on position information of a following device (40), the following device (40) that follows the work device (30) at each time. Furthermore, the work management program (320) causes the arithmetic operation device (120, 220) to execute outputting work information indicating a display image (400, 400B) representing the ridge (510) on which the work device (30) performed work and the following device (40) that follows the work device (30) in association with each other at each time.

A work management program (320) according to one embodiment to achieve the above-mentioned object causes an arithmetic operation device (120, 220) to execute determining, based on operation information of a work device (30) that performs work in a field (500), an operation status of the work device (30) at each time.

The work management program (320) causes the arithmetic operation device (120, 220) to execute determining, based on the operation information of the work device (30), a ridge (510) on which the work device (30) performed work at each time. Furthermore, the work management program (320) causes the arithmetic operation device (120, 220) to execute displaying a display image (400, 400B) representing the operation status of the work device (30) and the ridge (510) on which the work device (30) performed work in association with each other at each time.

### ADVANTAGEOUS EFFECTS OF INVENTION

According to the above embodiments, a user can easily recognize a finer unit related to work in a field, that is, for example, a ridge on which a work device performed a work, at each time.

### BRIEF DESCRIPTION OF DRAWINGS

FIG. 1 is a configuration diagram of a work management system according to one embodiment.
FIG. 2 is a diagram illustrating a display image displayed by a terminal according to one embodiment.
FIG. 3 is a diagram illustrating a configuration of a work management device according to one embodiment.
FIG. 4 is a diagram illustrating a functional block executed by a work management system according to one embodiment.
FIG. 5 is a diagram illustrating a configuration of a terminal according to one embodiment.
FIG. 6 is a flowchart illustrating processing performed by the work management system according to the embodiment.
FIG. 7 is a configuration diagram of the work management system according to one embodiment when a following device follows a work device.
FIG. 8 is a diagram illustrating a display image displayed by the terminal according to one embodiment when the following device follows the work device.
FIG. 9 is a diagram illustrating a functional block executed by the work management system according to one embodiment when the following device follows the work device.
FIG. 10 is a flowchart illustrating processing performed by the work management system according to one embodiment when the following device follows the work device.
FIG. 11 is a diagram illustrating a portion of a display image displayed by the terminal in the embodiment.

### DESCRIPTION OF EMBODIMENTS

### (First Embodiment)

A work management system 1000 according to an embodiment of the present disclosure will be described with reference to the drawings.

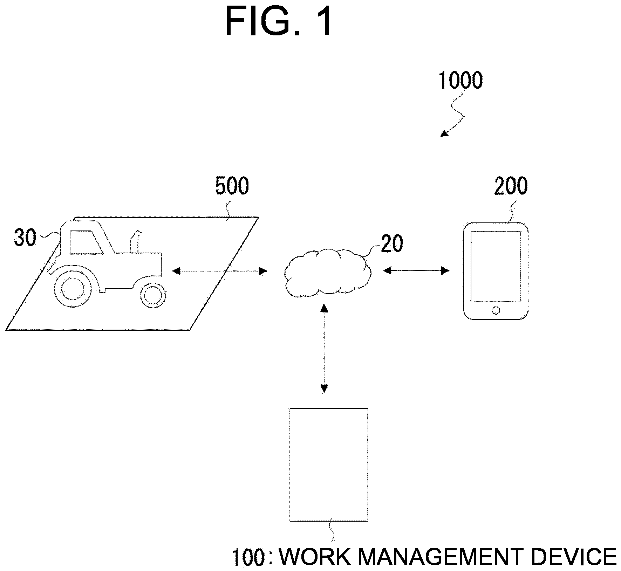

In this embodiment, as illustrated in FIG. 1, the work management system 1000 includes a work management device 100 and a terminal 200. The work management device 100 is communicably connected to the terminal 200 and at least one work device 30 via a network 20, that is, for example, the Internet.

The work vehicle 30 moves in a field 500 and thus performs agricultural work. The work device 30 includes, for example, a harvester, such as a tractor, a combine, or the like, to which various work machines are attached, a spraying machine, such as a drone or the like, that sprays an agricultural chemical, or the like.

The work device 30 outputs operation information at each time to the work management device 100. For example, the operation information includes position information representing a position of the first work device 30 at each time. The work device 30 includes a positioning device, such as, for example, a receiver of a global navigation satellite system (GNSS), a quantum compass, or the like, that measures the position at each time. For example, the work device 30 measures the position of the work device 30 itself at predetermined intervals, that is, for example, at intervals of 10 seconds, and acquires position information representing a time of the measurement and the position of the work device 30 itself in association with each other.

The operation information also includes state information representing a state of the first work device 30, such as, for example, a speed, a steering angle, an engine speed, an ON/OFF status of each of various clutches, or the like of the first work device 30 at each time while the work device 30 is performing work in the field 500. When the work device 30 is a vehicle, that is, for example, a tractor, that tows a work machine, the operation information may include information, such as a power take-off (PTO) rotation speed at a time of transmitting power to the work machine, a hitch height and a lift arm angle indicating a posture of the work machine, or the like. For example, the work device 30 measures a state of the work device 30 itself at predetermined intervals, that is, for example, at intervals of 10 seconds, and acquires state information representing a time of the measurement and the state of the work device 30 itself in association with each other.

The work management device 100 determines an operation status of the work device 30 at each time, that is, for example, working, moving, stopped, not operating, or the like, based on the operation information of the work device 30. The work management device 100 also determines a ridge on which the work device 30 is performing work at each time, based on the position information of the work device 30. Note that the operation status represents an overview of a status in which the work device 30 is operating, and represents, for example, a classification in accordance with whether the work device 30 is operating and the speed of the work device 30. For example, "working" represents that the work device 30 was performing agricultural work, and "moving" represents that the work device 30 was moving without performing agricultural work. "Stopped" represents that the work device 30 was stopped with a drive device, such as, for example, an engine, of the work device 30 running, and "not operating" represents that the drive device of the work device 30 was stopped.

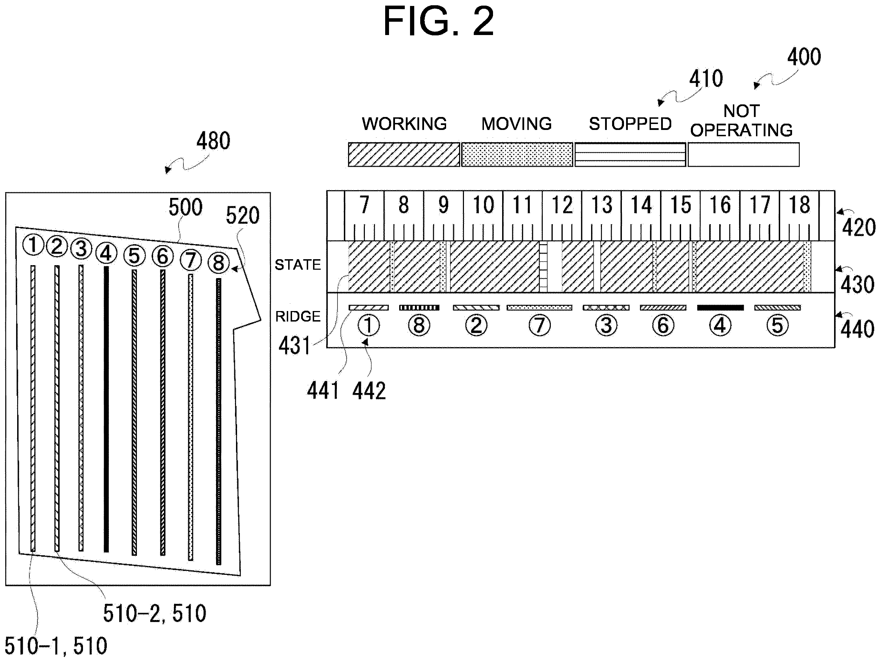

The terminal 200 displays the operation status of the work device 30 in association with the ridge on which the work device 30 is performing work at each time. For example, as illustrated in FIG. 2, the terminal 200 displays a display image 400 representing the operation status of the work device 30 and a ridge 510 on which the work device 30 is working in association with each other at each time. Thus, a user, such as, for example, a worker, an owner of the field 500, or the like, can easily recognize the ridge 510 on which the work device 30 performed work at each time.

### (Configuration of Work Management System)

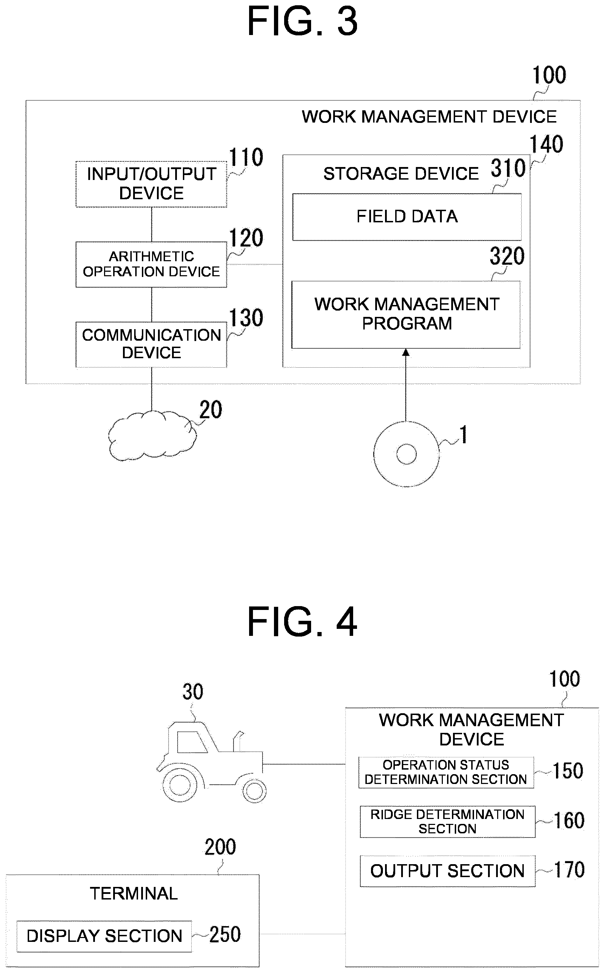

A configuration of the work management device 100 included in the work management system 1000 will be described. As illustrated in FIG. 3, the work management device 100 includes an input/output device 110, an arithmetic operation device 120, a communication device 130, and a storage device 140. The work management device 100 is, for example, a computer including a cloud server. Information used by the arithmetic operation device 120 for executing processing is input to the input/output device 110. The input/output device 110 outputs a result of processing executed by the arithmetic operation device 120. The input/output device 110 includes various input devices and output devices, and examples of the input/output device 110 include, for example, a keyboard, a mouse, a microphone, a display, a speaker, a touch panel, or the like. The input/output device 110 may be omitted.

The communication device 130 is electrically coupled to the network 20 and performs communication with each of the devices via the network 20. The communication device 130 transfers operation information acquired from the work vehicle 30 to the arithmetic operation device 120. The communication device 130 transfers a signal generated by the arithmetic operation device 120 to the terminal 200. The communication device 130 includes various interfaces, such as, for example, a network interface card (NIC), a universal serial bus (USB), or the like.

The storage device 140 stores various data, that is, for example, field data 310 and a work management program 320, used for determining the operation status of the work device 30 and the ridge 510 on which work was performed at each time. The storage device 140 is used as a non-transitory tangible storage medium that stores the work management program 320. The work management program 320 may be provided as a computer program product recorded on a computer-readable storage medium 1 or may be provided as a computer program product that can be downloaded from a server.

The field data 310 stores ridge information related to the ridge 510 provided in the field 500. For example, the ridge information represents a position of the ridge 510. For example, the ridge information may represent a line connecting both ends of the ridge 510, may represent, for example, a straight line segment, or may represent an area of the ridge 510.

The arithmetic operation device 120 reads and executes the work management program 320 from the storage device 140 to perform various kinds of data processing to determine the operation status of the work device 30 and the ridge 510 on which work was performed. Examples of the arithmetic operation device 120 include, for example, a central processing unit (CPU) or the like.

By reading and executing the work management program 320, as illustrated in FIG. 4, the arithmetic operation device 120 realizes an operation status determination section 150, a ridge determination section 160, and an output section 170. The operation status determination section 150 determines the operation status of the work device 30 at each time, for example, working, moving, stopped, not operating, or the like, based on the operation information of the work device 30. The ridge determination section 160 determines the ridge 510 on which the work device 30 performed work at each time. The output section 170 outputs work information representing the operation status of the work device 30 and the ridge 510 on which work was performed in association with each other at each time. For example, as illustrated in FIG. 2, the work information represents the display image 400 representing the operation status of the work device 30 and the ridge 510 on which work was performed in association with each other at each time.

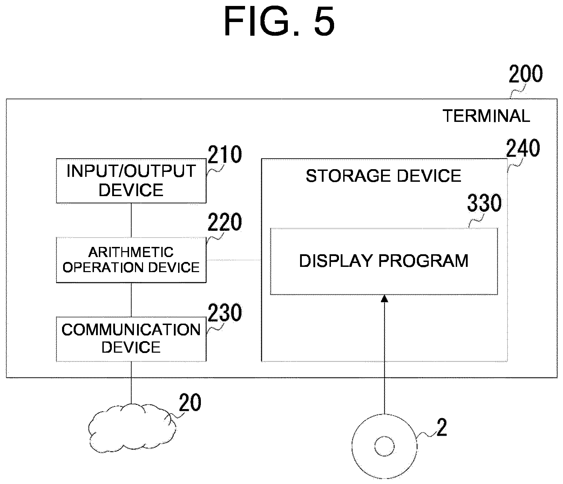

Next, a configuration of the terminal 200 will be described. As illustrated in FIG. 5, the terminal 200 includes an input/output device 210, an arithmetic operation device 220, a communication device 230, and a storage device 240. Examples of the terminal 200 include, for example, a computer, a tablet, a mobile phone, or the like. Information that is used by the arithmetic operation device 220 for executing processing is input to the input/output device 210. The input/output device 210 outputs a result of processing executed by the arithmetic operation device 220. The input/output device 210 includes various input devices and output devices, and examples of the input/output device 210 include, for example, a keyboard, a mouse, a microphone, a display, a speaker, a touch panel, or the like.

The communication device 230 is electrically coupled to the network 20 and performs communication with each of the devices via the network 20. The communication device 230 transfers information acquired from the work management device 100 to the arithmetic operation device 220. The communication device 230 transfers a signal generated by the arithmetic operation device 220 to the work management device 100. The communication device 230 includes, for example, various interfaces, such as a network interface card (NIC), a universal serial bus (USB), or the like.

The storage device 240 stores various data, that is, for example, a display program 330, used for displaying the work information representing the operation status of the work device 30 and the ridge 510 on which work was performed in association with each other on the input/output device 210 of the terminal 200. The storage device 240 is used as a non-transitory tangible storage medium that stores the display program 330. The display program 330 may be provided as a computer program product recorded on a computer-readable storage medium 2, or may be provided as a computer program product that can be downloaded from a server.

The arithmetic operation device 220 reads and executes the display program 330, and thus, performs various kinds of data processing to display the work information that is acquired from the work management device 100. Examples of the arithmetic operation device 220 include, for example, a central processing unit (CPU) or the like.

When the arithmetic operation device 220 reads and executes the display program 330, the arithmetic operation device 220 realizes a display section 250 in cooperation with the input/output device 210, as illustrated in FIG. 4. The display section 250 acquires the work information from the work management device 100 and displays the display image 400 representing the work information.

### (Operation of Work Management System)

A method by which the work management system 1000 determines work information will be described. As illustrated in FIG. 1, the work device 30 outputs operation information to the work management device 100. For example, when the drive device, such as, for example, an engine, a motor, or the like, is stopped, the work device 30 outputs operation information from a time when the drive device is started to a time when the drive device is stopped to the work management device 100. The work device 30 may be configured to, when the work device 30 is operating, successively output the operation information to the work management device 100.

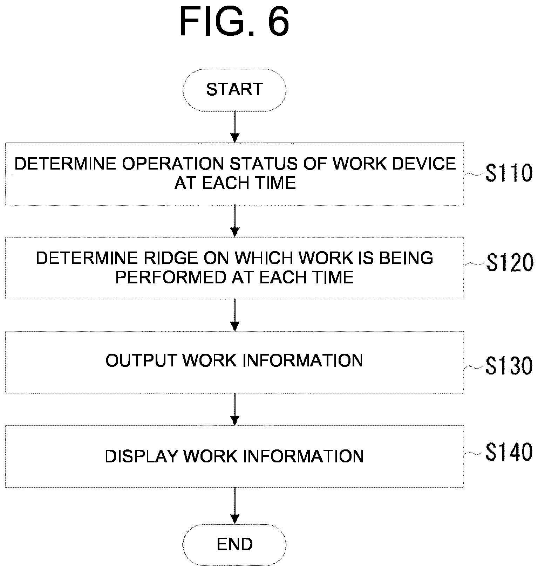

When the arithmetic operation device 120 of the work management device 100 receives the operation information from the work device 30, the arithmetic operation device 120 reads and executes the work management program 320 to start processing illustrated in FIG. 6 that is a work management method. In Step S 110, the operation status determination section 150 realized by the arithmetic operation device 120 determines the operation status of the work device 30 at each time, based on the operation information of the work device 30.

For example, the operation status determination section 150 determines the operation status of the work device 30 at each time, based on a speed of the work device 30 represented in the operation information. For example, the operation status determination section 150 determines, when the speed of the work device 30 is higher than a first threshold, that the work device 30 was moving (moving) at a time represented in the operation information, that is, for example, at a time when the speed of the work device 30 was measured. Moreover, the operation status determination section 150 determines, when the speed of the work device 30 is equal to or lower than the first threshold and is higher than a second threshold, that the work device 30 was working (working) at a time represented in the operation information. The operation status determination section 150 determines, when the speed of the work device 30 is equal to or lower than the second threshold, that the work device 30 was stopped (stopped) at a time represented in the operation information. The operation status determination section 150 determines, at a time when the operation information is not acquired by the work device 30, that the work device 30 was not operating (not operating). The speed of the work device 30 may be included in the state information of the work device 30, and may be determined from the position information of the work device 30. For example, the speed of the work device 30 may be determined based on a distance between two measured positions and an interval between measurement times in two pieces of position information whose measurement times are adjacent to each other.

In Step S120, the ridge determination section 160 determines the ridge 510 on which work is being performed at each time, based on the position information included in the operation information of the work device 30. For example, the ridge determination section 160 acquires ridge information representing a position of the ridge 510 in the field 500 from the field data 310.

The ridge determination section 160 determines that work is being performed on the ridge 510 that is located at a predetermined distance, that is, for example, 20 cm, or less from the position of the work device 30 at each time. Moreover, the ridge determination section 160 may be configured to determine the ridge 510 located at the predetermined distance or less from the position of the work device 30 continuously for a predetermined time, that is, for example, one minute or more, as the ridge 510 on which the work device 30 is performing work. The ridge determination section 160 may be configured to, when the ridge information represents an area of the ride 510, determine the ridge 510 including the position of the work device 30 as the ridge 510 on which work is being performed at each time. Furthermore, the ridge determination section 160 may be configured to determine the ridge 510 including the position of the work device 30 continuously for the predetermined time or more as the ridge 510 on which work is being performed at each time.

In Step S130, the output section 170 outputs the work information representing the operation status of the work device 30 and the ridge 510 on which work is being performed to the terminal 200 at each time. For example, as illustrated in FIG. 2, the work information represents the display image 400 representing the operation status of the work device 30 and the ridge 510 on which work is being performed in association with each other at each time. The display image 400 includes, for example, a work information display area 410 and a ridge information display area 480.

In the work information display area 410, information including the operation status of the work device 30 and the ridge 510 on which work is being performed in association with each other is represented at each time. For example, in the work information display area 410, each time is represented in a strip shape, the operation status of the work device 30 at each time and the ridge 510 on which work is being performed are represented in a position corresponding to a position in which the corresponding each time is represented. The work information display area 410 includes, for example, a time display area 420 representing each time, an operation status display area 430 representing the operation status of the work device 30, and a work ridge display area 440 representing the ridge 510 on which the work device is working.

In an example illustrated in FIG. 2, a time from 7 o'clock to 19 o'clock is represented in a strip shape in the time display area 420. In accordance with a position in which a time is represented in the time display area 420, the operation status of the work device 30 at the time, that is, for example, working, moving, stopped, not operating, or the like, is represented in the operation status display area 430. For example, an area in a display format in which the operation status of the work device 30 at the time is represented is represented below the position of the time represented in the time display area 420. For example, when the work device 30 is performing work in a period from 7:10 to 8:15, a working display area 431 in which it is represented that the work device 30 is working is represented below the position representing the period from 7:10 to 8:15 in the time display area 420. Moreover, in the example illustrated in FIG. 2, an area in which it is represented that the work device 30 is moving is represented below the position in which a period from 8:15 to 8:25 is represented in the time display area 420. Furthermore, an area in which it is represented that the work device 30 is stopped is represented below the position in which a period from 11:50 to 12:15 is represented in the time display area 420. An area in which it is represented that the work device 30 is not operating is represented below a position in which a period from 12:15 to 12:30 is represented in the time display area 420.

In accordance with a position in which a time is represented in the time display area 420, the ridge 510 on which work was performed at the time is represented in the work ridge display area 440. In the work ridge display area 440, for example, work time information 441 representing a period in which work was performed on the ridge 510, ridge identification information 442 representing the ridge 510 on which the work is performed, and, for example, an identifier representing the ridge 510 are represented. For example, the work time information 441 is represented as an area in a display format in which the ridge 510 is represented below the position in which the time at which work on the ridge 510 was performed is represented in the time display area 420. For example, when work was performed in a period from 7:10 to 8:15 on a first ridge 510-1, an area in which the first ridge 510-1 is represented is represented as the work time information 441 below a position in which a period from 7:10 to 8:15 is represented in the time display area 420. Furthermore, the ridge identification information 442 representing the ridge 510 on which the work was performed, that is, for example, a number representing the ridge 510, is represented in a position corresponding to the work time information 441. For example, the ridge identification information 442 is represented so as to be adjacent to a position in which the work time information 441 is represented. For example, the ridge identification information 442 is represented below the position in which the work time information 441 is represented.

In the ridge information display area 480, the work time information 441 and the position of the ridge 510 represented by the ridge identification information 442 are represented in the field 500. For example, in the ridge information display area 480, the field 500, the position of the ridge 510 in the field 500, and the ridge identifier 520 of the ridge 510 are displayed on a map. For example, the ridge 510 is represented in a display format, that is, for example, a color, a pattern, a line type, or the like, different from that of the other ridges 510. For example, the ridge 510 represented in the ridge information display area 480 is represented in a same display format as that of the work time information 441 in the work ridge display area 440. Moreover, the ridge identifier 520 represented in the ridge information display area 480 is represented in a same notation, that is, for example, a same character, as that of the ridge identification information 442 in the work ridge display area 440.

Therefore, the display image 400 illustrated in FIG. 2 represents that the work device 30 performed work from 9:45 to 10:50 in a second ridge 510-2.

As described above, the work information that is output from the output section 170 to the terminal 200 may represent the display image 400 representing the operation status of the work device 30 and the ridge 510 on which work is being performed in association with each other at each time.

In Step S140 illustrated in FIG. 6, the display section 250 of the terminal 200 displays the work information that is acquired from the work management device 100 on the input/output device 210. For example, as illustrated in FIG. 2, the display section 250 displays the display image 400 representing the operation information of the work device 30 at each time and the ridge 510 on which work was performed at each time in association with each other.

The user can easily confirm the ridge 510 on which the work device 30 performed work and the operation status of the work device 30 then at each time by browsing the work information, that is, for example, the display image 400, displayed on the input/output device 210.

### (Second Embodiment)

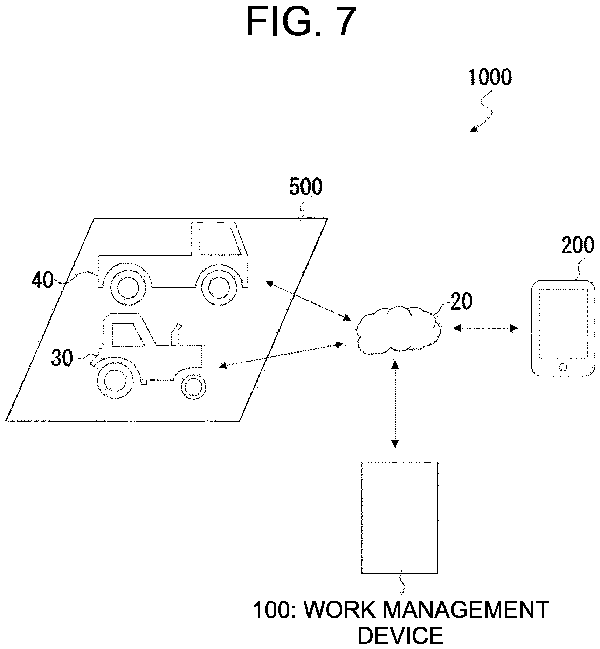

As illustrated in FIG. 7, the work device 30 is accompanied with a following device 40 that follows the work device 30 in some cases. For example, when the work device 30 harvests a crop, the harvested crop is loaded from the work device 30 to the following device 40, that is, for example, a transport vehicle, that follows the work device 30. When an amount of the loaded harvested crop reaches a loadable amount of the following device 40, the following device 40 leaves from the work device 30 and transports the harvested crop to a predetermined location, that is, for example, a post harvest plant.

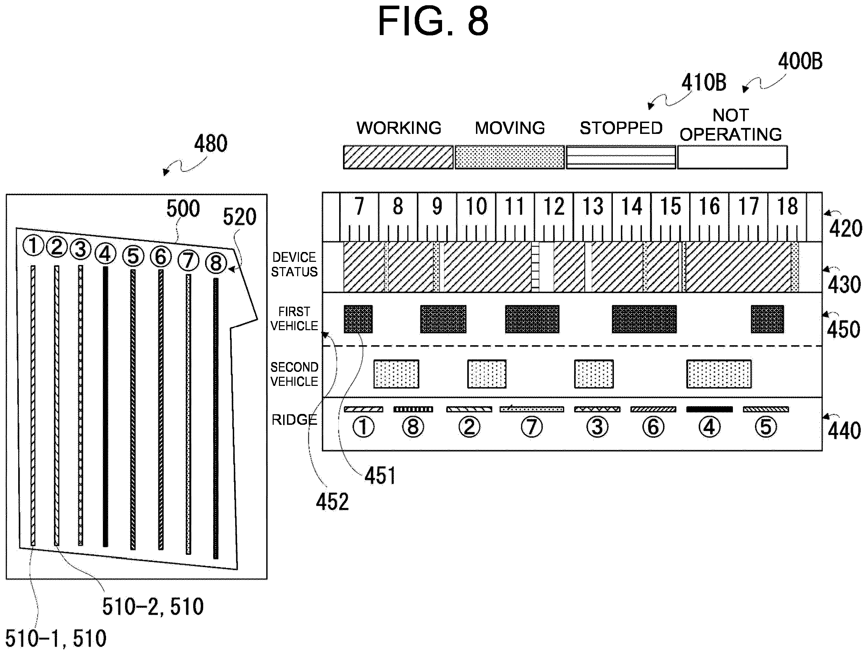

As illustrated in FIG. 8, the work management system 1000 may be configured to represent the following device 40 that follows the work device 30, in addition to the operation status of the work device 30 and the ridge 510 on which work was performed, at each time. In other words, the work management system 1000 may be configured to represent a period in which the following device 40 follows the work device 30, in addition to the operation status of the work device 30 and the ridge 510 on which work was performed, at each time. The user can confirm the following device 40 that follows the work device 30 and the ridge 510 on which work was performed at each time. Thus, for example, the user can easily estimate an amount of a crop loaded on the following device 40 by confirming the ridge 510 on which the work device 30 performed work while the following device 40 was following the work device 30.

Herein, the following device 40 includes a positioning device, such as, for example, a receiver of a global navigation satellite system (GNSS), a quantum compass, or the like, that measures a position at each time. Position information representing the measured position of the following device 40 is output from the following device 40 to the work management device 100.

### (Configuration of Work Management System)

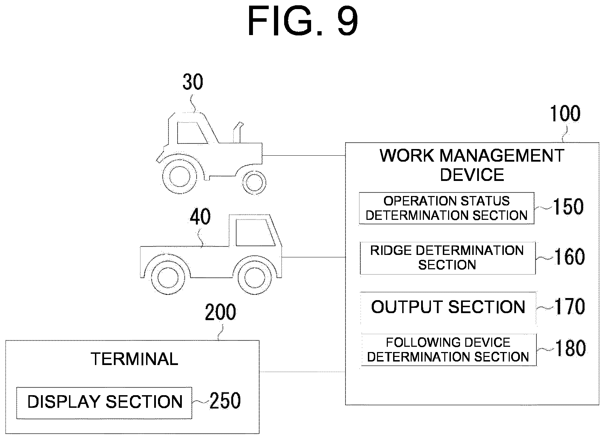

A configuration of the work management system 1000 is similar to that in the first embodiment, except that the work management device 100 executes the work management program 320 to realize a following device determination portion 180, as illustrated in FIG. 9. Therefore, except for the following device determination section 180, a detailed description will be omitted. The following device determination section 180 determines the following device 40 that follows the work device 30, based on the position information of the work device 30 and position information of the following device 40, at each time.

### (Operation of Work Management System)

A method by which the work management system 1000 determines work information will be described. Similar to the first embodiment, the work device 30 outputs the operation information to the work management device 100. The following device 40 also outputs the position information to the work management device 100. For example, when the following device 40 is operating, the following device 40 successively outputs the position information to the work management device 100. The following device 40 may be configured to, when the drive device, that is, for example, an engine, a motor, or the like, is stopped, output the position information from a time when the drive device is started to a time when the drive device is stopped to the work management device 100.

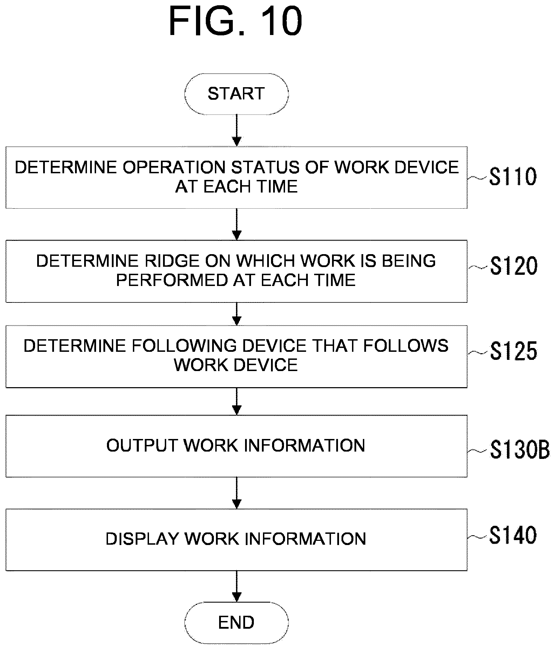

When the arithmetic operation device 120 of the work management device 100 receives the operation information from the work device 30 and also receives the position information from the following device 40, the arithmetic operation device 120 reads and executes the work management program 320 to start processing illustrated in FIG. 10 that is a work management method. Since processing of Step S110 and processing Step S 120 are similar to those in the first embodiment, description thereon is omitted.

In Step S125, the following device determination section 180 determines the following device 40 that follows the work device 30, based on the position information of the work device 30 and the position information of the following device 40, at each time. For example, the following device determination section 180 determines the following device 40 that is located at a predetermined distance, that is, for example, 3 m, or less from the position of the work device 30 as the following device 40 that follows the work device 30 at each time. In addition, the following device determination section 180 may be configured to determine the following device 40 that is located at the predetermined distance or less from the position of the work device 30 continuously for a predetermined time, that is, for example, one minute or more, as the following device 40 that follows the work device 30.

In Step S130B, the output section 170 outputs the work information representing the operation status of the work device 30, the ridge 510 on which work is being performed, and the following device 40 that follows the work device 30 to the terminal 200 at each time. For example, as illustrated in FIG. 8, the work information represents display image 400B representing the operation status of the work device 30 and the ridge 510 on which work is being performed in association with each other at each time. The display image 400B includes, for example, a work information display area 410B and a ridge information display area 480. Since the ridge information display area 480 has a similar configuration to that in the first embodiment, description thereon will be omitted.

In the work information display area 410B, information including the operation status of the work device 30, the ridge 510 on which work is being performed, and the following device 40 that follows the work device 30 in association with each other is represented at each time. For example, in the work information display area 410B, each time is represented in a strip shape, the operation status of the work device 30 at each time, the ridge 510 on which work is being performed, and the following device 40 that follows the work device 30 are identifiably represented in a position where a corresponding time is represented. The work information display area 410B includes, for example, a time display area 420, an operation status display area 430, a work ridge display area 440, and a following device display area 450. Since the time display area 420 and the operation status display area 430 are similar to those in the first embodiment, description thereon will be omitted.

In the following device display area 450, the following device 40 that follows the work device 30 is represented at each time. In an example illustrated in FIG. 8, in accordance with the position where the corresponding time is represented in the time display area 420, the following device 40 that follows the work device 30 at the time is represented in the following device display area 450. In the following device display area 450, for example, a following time information 451 representing a period in which the following device 40 follows the work device 30, a following device identification information 452 representing the following device 40 that follows the work device 30, and, for example, a name (first vehicle) of the following device 40 are represented. For example, the following time information 451 is represented as an area in a display format in which it is represented that the following device 40 follows the ridge 30 below the position in which the time at which the following device 40 follows the work device 30 is represented in the time display area 420. For example, when the following device 40, that is, for example, the first vehicle, follows the work device 30 in a period from 7:10 to 7:50, an area in which following of the device 40 is represented is represented as the following time information 451 below a position in which the period from 7:10 to 7:50 is represented in the following device display area 450.

When a plurality of following devices 40 follow the work device 30, the following devices 40 that follow the work device 30 are identifiably represented in the following device display area 450. For example, in an up and down direction, respective periods in which the following devices 40 follow the work device 30 are represented in different positions from each other. For example, below a position where a period in which a first following device 40, that is, for example, the first vehicle, follows the work device 30 is represented, represented is a period in which a second following device 40, that is, for example, a second vehicle, follows the work device 30.

As described above, the work information that is output from the output section 170 to the terminal 200 may represent the display image 400B representing the operation status of the work device 30, the ridge 510 on which work is being performed, and the following device 40 that follows the work device 30 in association with each other at each time.

In Step S140 illustrated in FIG. 10, similar to the first embodiment, the display section 250 of the terminal 200 displays the work information that is acquired from the work management device 100 on the input/output device 210. For example, as illustrated in FIG. 8, the display section 250 displays the display image 400B representing the operation information of the work device 30 at each time, the ridge 510 on which work was performed at each time, and the following device 40 that follows the work device 30 at each time in association with each other.

The user can easily confirm the ridge 510 on which the work device 30 performed work at each time and the following device 40 that followed the work device 30 then by browsing the work information, that is, for example, the display image 400B, displayed on the input/output device 210.

### (Variations)

The configurations described in the embodiments are merely examples, and can be changed to an extent that does not interfere with the functions. For example, in Step S 110 illustrated in FIG. 6 or FIG. 10, the operation status determination section 150 of the work management device 100 may be configured to determine the operation status of the work device 30, that is, for example, working, moving, stopped, not operating, or the like, based on the operation information by an arbitrary method. For example, the operation status determination section 150 may be configured to, when the speed of the work device 30 is higher than the second threshold, distinguish working and moving from each other, based on an attitude of a work machine, that is, for example, a pitch height, a lift arm angle, or the like thereof. For example, the operation status determination section 150 may be configured to distinguish working and moving from each other, based on the PTO rotation speed.

Moreover, in Step S110 illustrated in FIG. 6 or FIG. 10, a classification of the work status that is to be determined may be arbitrarily selected to represent an overview of a status in which the work device 30 is operating. For example, the operation status represents at least one classification of whether the work device 30 is operating and the speed of the work device 30. For example, the operation status may be classified into "operating" and "not operating" or may be classified into "working" and "other than working."

In Step S120 illustrated in FIG. 6 or FIG. 10, the ridge determination section 160 of the work management device 100 may be configured to determine the ridge 510 on which the work device 30 is performing work at each time, based on the position information of the work device 30, by an arbitrary method. For example, the ridge determination section 160 may be configured to determine, among the ridges 510 located at a predetermined distance, that is, for example, 1 m, or less from the position of the work device 30, the ridge 510 located closest to the position as the ridge 510 on which work is being performed. Moreover, the ridge determination section 160 may be configured to, when an interval between times at which work is being performed in the same ridge 510 is a predetermined period, that is, for example, 1 minute, or less, determine that work is being performed on the ridge 510 in the corresponding period. Furthermore, the ridge determination section 160 may be configured to extract the operation information representing that the work device 30 is performing work to determine the ridge 510 on which work is being performed at a time corresponding to the extracted operation information.

In Step S125 illustrated in FIG. 10, the following device determination section 180 of the work management device 100 may be configured to determine the following device 40 that follows the work device 30, based on the position information of the work device 30 and the position information of the following device 40, by an arbitrary method. For example, the following device determination section 180 may be configured to determine, among the following devices 40 that are located at a predetermined distance, that is, for example, 10 m, or less from the position of the work device 30, the following device 40 located closest to the position of the work device 30 as the following device 40 that follows the work device 30. Moreover, the following device determination section 180 may be configured to, when an interval between times at which the same following device 40 follows the work device 30 is a predetermined period, that is, for example, 1 minute, or less, determine that the following device 40 follows the work device 30 in the corresponding period. Furthermore, the following device determination section 180 may be configured to extract the operation information representing that the work device 30 is performing work to determine the following device 40 that follows the work device 30 at a time corresponding to the extracted operation information.

Ridge identification information 442 illustrated in FIG. 2 or FIG. 8 may include information representing the field 500, that is, for example, a name of the field 500. For example, in the work ridge display area 440, the information, that is, for example the name of the field 500, representing the field 500 in which the ridge 510 is provided may be represented so as to be adjacent to information, that is, for example, a number, representing the ridge 510 on which work was performed. Moreover, the information representing the field 500 in which the ridge 510 is provided may be represented at a left end of the work ridge display area 440. In this case, for example, when the ridges 510 on which work was performed are represented in a plurality of fields 500, information representing each of the ridges 510 and the following time information 451 thereof may be represented in a position corresponding to a corresponding one of the fields 500 each in which the ridge 510 is provided. For example, in the up and down direction, respective periods in which work was performed in the ridges 510 provided in the respective fields 500 are represented in different positions from each other. For example, below a position where a period in which work was performed on the ridge 510 provided in one of the fields 500, represented is a period in which work was performed on the ridge 510 provided in another one of the fields 500.

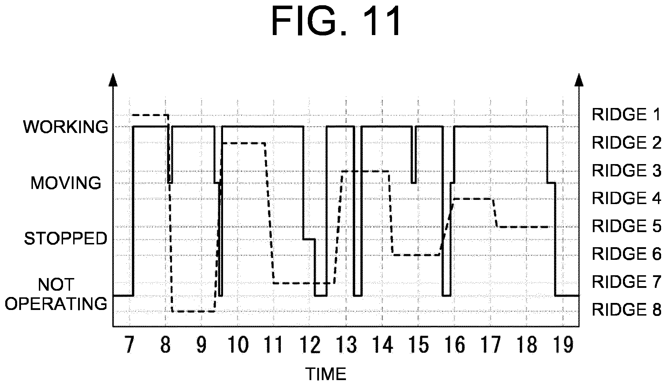

In Step S130 illustrated in FIG. 6, the output section 170 of the work management device 100 may be configured to output the work information representing the operation status of the work device 30 and the ridge 510 on which work is being performed in an arbitrary format to the terminal 200 at each time. For example, as illustrated in FIG. 11, the work information may represent a graph representing the operation status of the work device 30 and the ridge 510 on which work is being performed for each time. For example, as illustrated in FIG. 11, the work information may represent a graph representing the operation status of the work device 30 and the ridge 510 on which work is being performed for each time. In this case, the display section 250 of the terminal 200 displays an image representing the graph illustrated in FIG. 11 in the work information display area 410 illustrated in FIG. 2.

In Step S130B illustrated in FIG. 10, the output section 170 may be configured to output the work information representing the operation status of the work device 30, the ridge 510 on which work is being performed, and the following device 40 that follows the work device 30 in an arbitrary format to the terminal 200 at each time. Moreover, the output section 170 may be configured to output the work information representing two of the operation status of the work device 30, the ridge 510 on which work is being performed, and the following device 40 that follows the work device 30 in association with each other to the terminal 200 at each time.

As another option, the work information that is output from the output section 170 of the work management device 100 may not represent the display images 400 and 400B illustrated in FIG. 2 and FIG. 8. For example, the display section 250 of the terminal 200 may be configured to generate configurations of the display images 400 and 400B, based on the work information.

In Step S125 illustrated in FIG. 10, when the operation information of the work device 30 includes harvested crop information representing an amount of yield of a harvested crop, the following device determination section 180 may be configured to determine an amount of a crop stored in the following device 40 that follows the work device 30, based on the operation information. For example, the following device determination section 180 determines an amount of yield of a crop harvested by the work device 30 as the amount of the crop stored in the following device 40 in a period in which the following device 40 follows the work device 30. Information representing the amount of the crop stored in the following device 40 is included in the work information and is thus output to the terminal 200. For example, the display image 400B represented by the work information may represent the amount of the crop stored in the following device 40 in a position corresponding to the following time information 451 representing a period in which the following device 40 followed the work device 30. For example, the display image 400B may represent the amount of yield of the harvested crop stored in the following device 40 adjacent to the following time information 451 representing the period in which the following device 40 followed the work device 30. For example, in the display image 400B, the amount of yield of the harvested crop stored in the following device 40 may be represented below or above the following time information 451.

The embodiments and the variations described above are merely examples, and the configurations described in the embodiments and the variations may be arbitrarily changed and/or arbitrarily combined to an extent that does not interfere with the functions. Furthermore, some of the functions described in the embodiments and the variations may be omitted as long as necessary functions can be achieved. For example, some or all of processes in the terminal 200 may be executed by the work management device 100. Moreover, some or all of processes in the work management device 100 may be executed by the terminal 200. Furthermore, the work management program 320 may include a display program 330.

The work management system 1000 may be configured not to include the terminal 200 but cause an external terminal that is not included in the work management system 1000 to display the work information.

### (Additional Remarks)

The work management method, the work management system, and the work management program described in each embodiment can be described as follows.

A work management method according to a first aspect includes
determining, based on operation information of a work device that performs work in a field, an operation status of the work device at each time,
determining, based on the operation information of the work device, a ridge on which the work device performed work at each time, and
outputting work information indicating a display image representing the operation status of the work device and the ridge on which the work device performed work in association with each other at each time.

A work management method according to a second aspect is the work management method according to the first aspect,
further includes determining, based on position information of a following device, the following device that follows the work device at each time, and
the work information represents the following device that follows the work device in association with the ridge on which the work device performed work at each time.

A work management method according to a third aspect is the work management method according to the second aspect,
the work information of the work device includes harvested crop information representing an amount of yield of a crop harvested by the work device at each time,
the work management method further includes determining, based on the harvested crop information, an amount of a crop stored by the following device when the following device follows the work device, and
the work information represents information representing the amount of the crop stored by the following device when the following device follows the work device in association with a period in which the following device follows the work device.

A work management method according to a fourth aspect is the work management method according to any one of the first to third aspects, and
the operation status represents at least one classification of whether the work device is operating and a speed of the work device.

A work management method according to a fifth aspect is the work management method according to any one of the first to fourth aspects, and
the display image represents each time in a strip shape and further represents the operation status of the work device at each time and the ridge on which work was performed in association with each other in a position corresponding to a position in which each time is represented.

A work management method according to a sixth aspect is the work management method according to any one of the first to fifth aspects and further includes
displaying the display image represented by the work information.

A work management method according to a seventh aspect includes
determining, based on operation information of a work device that performs work in a field, a ridge on which the work device performed work at each time,
determining, based on position information of a following device, the following device that follows the work device at each time, and
outputting work information indicating a display image representing the ridge on which the work device performed work and the following device that follows the work device in association with each other at each time.

A work management method according to an eighth aspect includes
determining, based on operation information of a work device that performs work in a field, an operation status of the work device at each time,
determining, based on the operation information of the work device, a ridge on which the work device performed work at each time, and
displaying a display image representing a state of the work device and the ridge on which the work device performed work in association with each other at each time.

A work management system according to a ninth aspect includes
an operation status determination section that determines, based on operation information of a work device that performs work in a field, an operation status of the work device at each time,
a ridge determination section that determines, based on the operation information of the work device, a ridge on which the work device performed work at each time, and
an output section that outputs work information indicating a display image representing the operation status of the work device and the ridge on which the work device performed work in association with each other at each time.

A work management system according to a tenth aspect includes
a ridge determination section that determines, based on operation information of a work device that performs work in a field, a ridge on which the work device performed work at each time,
a following device determination section that determines, based on position information of a following device, the following device that follows the work device at each time, and
an output section that outputs work information indicating a display image representing the ridge on which the work device performed work and the following device that follows the work device in association with each other at each time.

A work management system according to an eleventh aspect includes
an operation status determination section that determines, based on operation information of a work device that performs work in a field, an operation status of the work device at each time,
a ridge determination section that determines, based on the operation information of the work device, a ridge on which the work device performed work at each time, and
a display section that displays a display image representing the operation status of the work device and the ridge on which the work device performed work in association with each other at each time.

A work management program according to a twelfth aspect that causes an arithmetic operation device to execute
determining, based on operation information of a work device that performs work in a field, an operation status of the work device at each time,
determining, based on the operation information of the work device, a ridge on which the work device performed work at each time, and
outputting work information indicating a display image representing the operation status of the work device and the ridge on which the work device performed work in association with each other at each time.

A work management program according to a thirteenth aspect that causes an arithmetic operation device to execute
determining, based on operation information of a work device that performs work in a field, a ridge on which the work device performed work at each time,
determining, based on position information of a following device, the following device that follows the work device at each time, and
outputting work information indicating a display image representing the ridge on which the work device performed work and the following device that follows the work device in association with each other at each time.

A work management program according to a fourteenth aspect that causes an arithmetic operation device to execute
determining, based on operation information of a work device that performs work in a field, an operation status of the work device at each time,
determining, based on the operation information of the work device, a ridge on which the work device performed work at each time, and
displaying a display image representing the operation status of the work device and the ridge on which the work device performed work in association with each other at each time.

### REFERENCE SIGNS LIST

1, 2 storage medium
20 network
30 work device
40 following device
100 work management device
110 input/output device
120 arithmetic operation device
130 communication device
140 storage device
150 operation status determination section
160 ridge determination section
170 output section
180 following device determination section
200 terminal
210 input/output device
220 arithmetic operation device
230 communication device
240 storage device
250 display section
310 field data
320 work management program
330 display program
400 display image
410 work information display area
420 time display area
430 operation status display area
431 working display area
440 work ridge display area
441 work time information
442 ridge identification information
450 following device display area
451 following time information
452 following device identification information
480 ridge information display area
500 field
510 ridge
520 ridge identifier
1000 work management system

## Claims

1. A work management method comprising:
determining, based on operation information of a work device that performs work in a field, an operation status of the work device at each time;
determining, based on the operation information of the work device, a ridge on which the work device performed work at each time; and
outputting work information indicating a display image representing the operation status of the work device and the ridge on which the work device performed work in association with each other at each time.

2. The work management method according to claim 1, the method further comprising:
determining, based on position information of a following device, the following device that follows the work device at each time,
wherein the work information represents the following device that follows the work device in association with the ridge on which the work device performed work at each time.

3. The work management method according to claim 2,
wherein the operation information of the work device includes harvested crop information representing an amount of yield of a crop harvested by the work device at each time,
the work management method further includes determining, based on the harvested crop information, an amount of a crop stored by the following device when the following device follows the work device, and
the work information represents information representing the amount of the crop stored by the following device when the following device follows the work device in association with a period in which the following device follows the work device.

4. The work management method according to any one of claims 1 to 3,
wherein the operation status represents at least one classification of whether the work device is operating and a speed of the work device.

5. The work management method according to any one of claims 1 to 3,
wherein the display image represents each time in a strip shape and further represents the operation status of the work device at each time and the ridge on which work was performed in association with each other in a position corresponding to a position in which each time is represented.

6. The work management method according to any one of claims 1 to 3, further comprising:
displaying the display image represented by the work information.

7. A work management method comprising:
determining, based on operation information of a work device that performs work in a field, a ridge on which the work device performed work at each time;
determining, based on position information of a following device, the following device that follows the work device at each time; and
outputting work information indicating a display image representing the ridge on which the work device performed work and the following device that follows the work device in association with each other at each time.

8. A work management method comprising:
determining, based on operation information of a work device that performs work in a field, an operation status of the work device at each time;
determining, based on the operation information of the work device, a ridge on which the work device performed work at each time; and
displaying a display image representing the operation status of the work device and the ridge on which the work device performed work in association with each other at each time.

9. A work management system comprising:
an operation status determination section that determines, based on operation information of a work device that performs work in a field, an operation status of the work device at each time;
a ridge determination section that determines, based on the operation information of the work device, a ridge on which the work device performed work at each time; and
an output section that outputs work information indicating a display image representing the operation status of the work device and the ridge on which the work device performed work in association with each other at each time.

10. A work management system comprising:
a ridge determination section that determines, based on operation information of a work device that performs work in a field, a ridge on which the work device performed work at each time;
a following device determination section that determines, based on position information of a following device, the following device that follows the work device at each time; and
an output section that outputs work information indicating a display image representing the ridge on which the work device performed work and the following device that follows the work device in association with each other at each time.

11. A work management system comprising:
an operation status determination section that determines, based on operation information of a work device that performs work in a field, an operation status of the work device at each time;
a ridge determination section that determines, based on the operation information of the work device, a ridge on which the work device performed work at each time; and
a display section that displays a display image representing the operation status of the work device and the ridge on which the work device performed work in association with each other at each time.

12. A work management program that causes an arithmetic operation device to execute:
determining, based on operation information of a work device that performs work in a field, an operation status of the work device at each time;
determining, based on the operation information of the work device, a ridge on which the work device performed work at each time; and
outputting work information indicating a display image representing the operation status of the work device and the ridge on which the work device performed work in association with each other at each time.

13. A work management program that causes an arithmetic operation device to execute:
determining, based on operation information of a work device that performs work in a field, a ridge on which the work device performed work at each time;
determining, based on position information of a following device, the following device that follows the work device at each time; and
outputting work information indicating a display image representing the ridge on which the work device performed work and the following device that follows the work device in association with each other at each time.

14. A work management program that causes an arithmetic operation device to execute:
determining, based on operation information of a work device that performs work in a field, an operation status of the work device at each time;
determining, based on the operation information of the work device, a ridge on which the work device performed work at each time; and
displaying a display image representing the operation status of the work device and the ridge on which the work device performed work in association with each other at each time.
